Europäisches Patentamt

**European Patent Office**

Office européen des brevets

(11) Publication number: **0 031 225**
A1

(12) # EUROPEAN PATENT APPLICATION

(21) Application number: **80304493.2**

(22) Date of filing: **12.12.80**

(51) Int. Cl.³: **H 02 J 7/14**
**F 02 N 11/08**

(30) Priority: **21.12.79 GB 7944227**

(43) Date of publication of application:
**01.07.81 Bulletin 81/26**

(84) Designated Contracting States:
**DE FR GB IT**

(71) Applicant: **LUCAS INDUSTRIES LIMITED**
**Great King Street**
**Birmingham, B19 2XF(GB)**

(72) Inventor: **Allport, Maurice James**
**31 Hampshire Drive Edgbaston**
**Birmingham(GB)**

(74) Representative: **Prutton, Roger et al,**
**MARKS & CLERK Alpha Tower A.T.V.Centre**
**Birmingham B1 1TT(GB)**

(54) **Battery charging system.**

(57) A battery charging system for a road vehicle electrical system with two batteries (113 and 114) which are connected in series for engine starting. The main battery (113) is connected by a full wave rectifier (111) to the alternator stator (110) and further diodes (117) permanently connect one phase of the stator of the auxiliary battery (116). A relay (119) connected to a starter switch (118) operates a contact (119a) which connects the batteries in series for starting only, the further diodes (117) then isolating the auxiliary battery (116) from the stator.

FIG.1.

EP 0 031 225 A1

The present invention relates to a battery charging system.

It has previously been proposed to utilize two batteries in an engine starter motor system. The batteries are either connected permanently in series and charged with a transformer, d.c. to d.c. converter, or voltage doubler arrangement providing charge current to the added battery, or a series/parallel switch arrangement is used to connect the batteries in parallel for charging and in series for starting. The former arrangement can be expensive and unreliable and the latter may interfere with the proper charging of the main battery if the switch arrangement is not of very high quality.

The present invention seeks to overcome these drawbacks in a simple and efficaceous manner.

A battery charging system in accordance with the invention comprises a main battery, a generator permanently connected to said main battery for maintaining the latter charged, an auxiliary battery, diode means permanently connected to the auxiliary battery and to the generator so that the auxiliary battery is charged by the generator, a starter switch, a relay connected to be energised when said starter switch is actuated, said relay having a contact connecting the auxiliary battery in series with the main battery across a starter motor, without interrupting the connection formed by said diode means between the auxiliary battery and the generator.

In the accompanying drawings,
Figure 1 is a circuit diagram of an embodiment of the invention, and
Figures 2, 3 and 4 are diagrams of possible modifications.

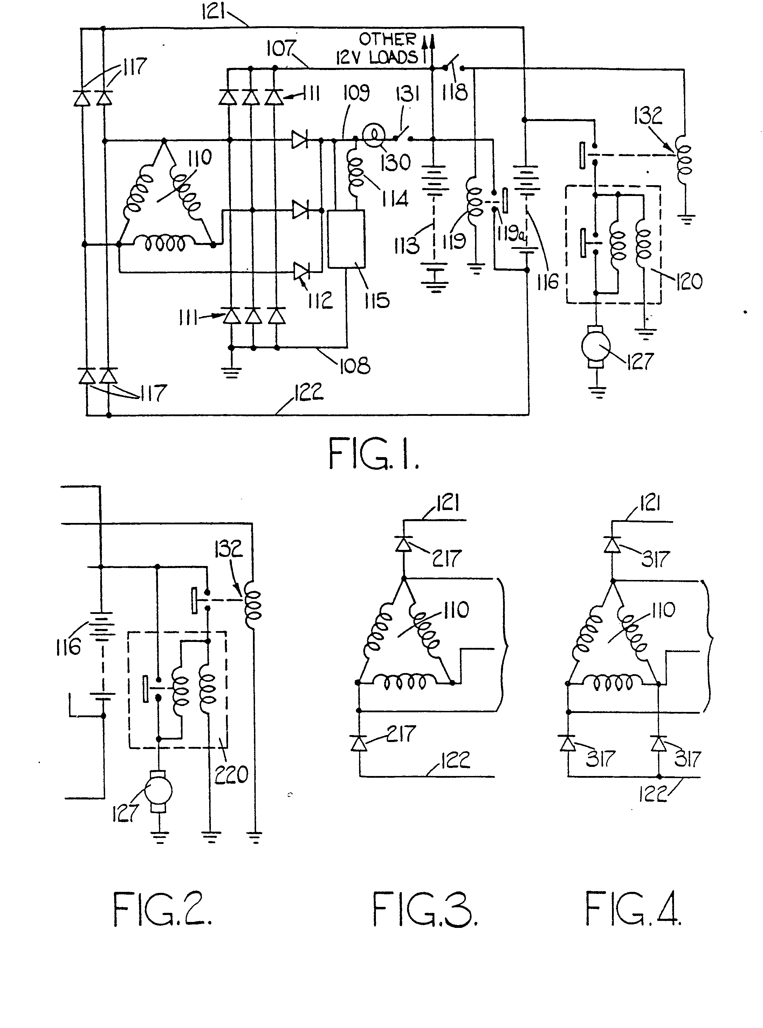

Referring to Figure 1, the circuit shown therein, includes an alternator stator winding 110 of the three phase type, associated with a main rectifier 111 and an auxiliary rectifier 112. The main rectifier 111 connects the winding 110 through a first supply line 107 and a second supply line 108 to a main 12V battery 113 and the auxiliary rectifier supplies 112 power through a third supply line 109 to a field winding 114 controlled, as is usual, by a voltage regulator 115. A warning lamp 130 and an ignition switch 131 are connected, in series, between the first and third supply lines, the lamp being energised whenever the alternator is producing no output.

An auxiliary 12V battery 116 is connected to the alternator by four diodes 117 through a fourth supply line 121 and a fifth supply line 122 so that it is kept charged by two phases of the alternator output. A starter switch 118 is connected to the positive pole of the main battery 113 and controls a relay winding 119 which has a single normally open contact 119a connecting the negative pole of battery 116 to the positive pole of battery 113.

The switch 118 also connects the positive pole of battery 113 to a further relay winding 132 which controls the current to a starter solenoid 120 winding (or windings) which incorporates, as is usual, main starter contacts in series with the starter motor 127. The contacts of relay 132 and the contacts of the solenoid 120 in series connect the motor 127 to the positive pole of battery 116 so that when they close the motor 127 is connected to a 24V supply.

In use, the two batteries 113 and 119 are fully isolated from one another by their independent rectifier diodes. Both are charged by the alternator, the battery 116 receiving less charge current than the battery 113 because it is not required to supply other loads.

0031225

On closing of the starter switch 118, relay 119 operates to connect batteries 113 and 116 in series, and energise the solenoid 120.

In the modification shown in Figure 2 the starter solenoid 220 is modified by having separate external connections for its winding(s) and its contacts. The contacts of relay 132, in this case, are connected in series with the solenoid windings, but a direct connection to the solenoid contacts from the battery 116 is provided. In this case the relay 132 contacts do not have to carry starter current.

In the modification shown in Figure 3 only two diodes 217 are used in place of the four diodes 117 of Figure 2. In Figure 4 there are three diodes 317 instead of diodes 117.

CLAIMS

1.    A battery charging system comprising a main battery,
a generator permanently connected to said main battery for
maintaining the latter charged, an auxiliary battery, diode
means permanently connected to the auxiliary battery and to
the generator so that the auxiliary battery is charged by
the generator, a starter switch, a relay connected to be
energised when said starter switch is actuated, said relay
having a contact connecting the auxiliary battery in series
with the main battery across a starter motor, without
interrupting the connection formed by said diode means
between the auxiliary battery and the generator.

2.    A battery charging system as claimed in claim 1 in
which the generator is an alternator, the stator winding of
which is connected to the main battery by a full wave
rectifier.

3.    A battery charging system as claimed in claim 2 in
which said diode means comprises a full wave rectifier
comprising four diodes, connecting the two ends of one
phase winding of the stator to the auxiliary battery.

4.    A battery charging system as claimed in claim 2 in
which said diode means comprises a half wave rectifier
comprising two diodes connecting the two ends of one phase
winding of the stator to the auxiliary battery.

5.    A battery charging system as claimed in claim 2 in
which said diode means comprises a first diode connecting
one phase point of the stator to one terminal of the auxiliary battery and second and third diodes connecting the other
two phase points to the other terminal of the auxiliary
battery.

6. A battery charging system as claimed in any preceding claim including a further relay operable by the starter switch and having a contact in series with a starter solenoid across the series combination of the two batteries when the first-mentioned relay is energised.

0031225

FIG.1.

FIG.2.

FIG.3.

FIG.4.

**0031225**

## EUROPEAN SEARCH REPORT

European Patent Office

Application number

EP 80 30 4493

| | DOCUMENTS CONSIDERED TO BE RELEVANT | | CLASSIFICATION OF THE APPLICATION (Int. Cl.³) |
|---|---|---|---|

| Category | Citation of document with indication, where appropriate, of relevant passages | Relevant to claim |
|---|---|---|
| X | US - A - 4 161 684 (I. RAGALY) <br> * Whole document * <br><br>-- <br><br> US - A - 3 962 621 (L.J. RAVER) <br> * Column 8, line 13 to column 9, line 49; figure 5 * <br><br>-- <br><br> US - A - 3 809 995 (J.T. HARDIN) <br> * Column 1, lines 5-26; column 4, lines 3-14; figures 5,6 * <br><br>-- <br><br> FR - A - 2 237 780 (THE LUCAS ELECTRICAL COMP.) <br> * Page 1, line 26 to page 2, line 21; figure * <br><br>-- <br><br> US - A - 4 156 171 (W. KOFINK) <br> * Column 2, line 66 to column 3, line 42; figure 1 * <br><br>----- | 1-3 <br><br><br> 1,2 <br><br><br><br> 3,4 <br><br><br><br> 2,6 <br><br><br><br> 5 |

**CLASSIFICATION OF THE APPLICATION (Int. Cl.³)**

H 02 J  7/14
F 02 N  11/08

**TECHNICAL FIELDS SEARCHED (Int Cl.³)**

H 02 J  7/14
F 02 N  11/08

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 17-03-1981 | POINT |

EPO Form 1503.1  06.78